## Europäisches Patentamt
## European Patent Office
## Office européen des brevets

(19)

(11) Veröffentlichungsnummer: **0 035 053**
**B1**

(12) # EUROPÄISCHE PATENTSCHRIFT

(45) Veröffentlichungstag der Patentschrift:
**01.02.84**

(21) Anmeldenummer: **80105512.0**

(22) Anmeldetag: **13.09.80**

(51) Int. Cl.³: **B 01 D 53/36,** B 01 D 46/24,
F 01 N 3/28

(54) **Katalytisches Filter für die Dieselabgasreinigung.**

(30) Priorität· **20.12.79 DE 2951316**

(43) Veröffentlichungstag der Anmeldung.
**09.09.81 Patentblatt 81/36**

(45) Bekanntmachung des Hinweises auf die Patenterteilung:
**01.02.84 Patentblatt 84/5**

(84) Benannte Vertragsstaaten:
**AT BE DE FR GB IT NL SE**

(56) Entgegenhaltungen:
**DE - A - 2 200 507**
**DE - A - 2 200 508**
**DE - A - 2 226 608**
**DE - A - 2 251 631**
**DE - A - 2 655 750**
**DE - A - 2 720 322**
**DE - B - 1 115 220**
**DE - C - 750 701**
**DE - C - 884 904**
**DE - C - 1 192 624**

(73) Patentinhaber: **Degussa Aktiengesellschaft,**
**Weissfrauenstrasse 9, D-6000 Frankfurt am Main 1 (DE)**

(72) Erfinder: **Bozon, Alfred, Beethovenstrasse 15,**
**D-6451 Erlensee (DE)**
Erfinder: **Koberstein, Edgar, Dr., Wolfskernstrasse 8,**
**D-8755 Alzenau (DE)**
Erfinder: **Pletka, Hans-Dieter, Dr., Im**
**Schwalbengrund 20, D-6463 Freigericht 1 (DE)**
Erfinder: **Völker, Herbert, Bogenstrasse 73,**
**D-6450 Hanau 11 (DE)**

BUNDESDRUCKEREI BERLIN

Katalytisches Filter für die Dieselabgasreinigung

Die Erfindung betrifft ein katalytisches Filter für die Dieselabgasreinigung.

Im Zuge der Verknappung der Welterdölvorräte werden Erdölprodukte und damit auch Treibstoffe für Verbrennungsmaschinen immer teurer. Man ist daher bestrebt, Motoren zu konstruieren, welche einen möglichst geringen Kraftstoffverbrauch haben. Eine Alternativlösung zu diesem Problem ist der Dieselmotor mit einem um mindestens ca. 5% höheren Wirkungsgrad als mit Ottokraftstoffen betriebene Motoren. Ausgenommen hiervon sind sogenannte Magerkonzepte für Ottomotoren, jedoch sind diese konstruktiv noch nicht voll ausgereift.

Mit den meisten Dieselmotoren sind ohne Katalysator sämtliche z. Z. gültigen Abgasgrenznormen einzuhalten. Das schließt aber nicht aus, daß es durch Dieselmotoren häufig zu Umweltbelastungen kommt und bei einem prozentualen Anstieg der Zulassungszahlen ein echtes Problem daraus erwachsen könnte.

Dieselmotoren emittieren nämlich neben den auch von Ottomotoren ausgestoßenen Schadstoffen, wie CO, Kohlenwasserstoffen und Stickoxiden, bedingt durch ihre Betriebsweise, auch Rußteilchen bzw. feinste Kondensattröpfchen, oder ein Konglomerat von beiden (»particulates«). Diese »particulates« sind besonders reich an kondensierten, polynuklearen Kohlenwasserstoffen, von denen einige als krebserregend erkannt worden sind. Auch Aldehyde gehören zu den emittierten Stoffen und tragen zur Geruchsbelästigung der Umwelt bei.

In manchen Ländern, wie in den Vereinigten Staaten, ist nun beabsichtigt, Grenzwerte für Schadstoffe und »particulates« in Dieselabgasen einzuführen, welche durch motorseitige Maßnahmen nicht mehr erreicht werden können. Mit Abgasrückführung (EGR) kann zwar z. B. eine Reduzierung der $NO_x$-Emission erzielt werden, führt aber gleichzeitig zu einer überproportionalen Erhöhung der »particulates«.

Andere Lösungen zur Reduzierung der Schadstoffe aus Dieselmotorabgasen schlagen vor, Ruß und Kondensatteilchen in Fallen (particulate traps) einzufangen. Da aber die Temperaturen von Dieselabgasen normalerweise nicht ausreichen um Ruß abzubrennen — dazu sind mindestens 450°C nötig — muß für eine Erhöhung der Abgastemperatur zur Regenerierung der Falle gesorgt werden, um ein Akkumulieren von Ruß und Kondensat und damit Verstopfungen zu vermeiden. Dies kann u. a. so geschehen, daß das Luft/Kraftstoffgemisch periodisch angefettet wird und sich dadurch höhere Abgastemperaturen ergeben. Eine Anfettung des Luft/Kraftstoffgemisches ist aber mit zusätzlichem Kraftstoffverbrauch verbunden und würde einen Vorteil des Dieselmotors teilweise wieder aufheben.

Außerdem kann ein Zünden einer Anhäufung von Ruß- und Kondensatteilchen zu einem unkontrollierten, ja explosionsartigen Abbrennen und mithin zur Zerstörung der Falle bzw. des ganzen Auspuffsystems führen. Die im Dieselabgas enthaltenen flüchtigen Kohlenwasserstoffe, Kohlenmonoxid sowie geruchsbelästigenden Stoffe, wie Aldehyde können mittels Fallen o. ä. natürlich nicht abgeschieden werden; zu deren Beseitigung ist die katalytische Umsetzung erforderlich.

Es bestünde zwar die Möglichkeit, zum Abbau der genannten Schadstoffe einen Katalysator z. B. auf Basis eines monolithischen keramischen Verstärkerkörpers (siehe US-PS 3 597 165) einzusetzen, jedoch werden solche Anordnungen schon nach kurzer Betriebszeit aufgrund ihrer relativ weit vom Motor entfernten Anbringung nach und nach mit Ruß belegt und verlieren dadurch oft rasch ihre Aktivität. Die »particulates« können aber ungehindert die Kanäle des Verstärkers passieren ohne abgebaut zu werden.

Andere Vorrichtungen behelfen sich zusätzlich zu einem Katalysator mit einem Filter zur Abscheidung von Ruß- und Kondensatteilchen. Die Reinigung dieses Filters erfolgt mechanisch durch Abschütteln der Partikeln (GB-PS 1 425 386). Es bleibt aber immer noch das Problem, daß die Partikel an einem nachgeschalteten Katalysator praktisch nicht umgesetzt werden.

Die Erfindung betrifft ein als Träger für Katalysatoren dienendes Filter zur Reinigung der Abgase von Dieselmotoren, welches das Abgas zum Durchströmen der Filterflächen zwingt und zu einem gasdurchlässigen Paket geschichtete oder zu einem gasdurchlässigen Körper spiralig aufgewickelte Lagen aufweist, wobei das Paket bzw. der Wickelkörper an den gegenüberliegenden Stirnflächen so durch Abdeckmittel verschlossen ist, daß ein verschlossener Stirnflächenabschnitt einem offenen Stirnflächenabschnitt gegenüberliegt, wobei ein Wickelkörper zylindrischen, ovalen, rechteckigen oder mehreckigen Querschnitt haben kann.

Die Erfindung ist dadurch gekennzeichnet, daß die Lagen aus temperatur- und korrosionsbeständigem Metall bestehen, wobei entweder

a) jeweils eine Lage eines gewellten oder gefalteten Siebgewebes mit jeweils einer ebenen, geschlossenen Decklage abwechselt, oder

b) jeweils eine Lage eines gewellten oder gefalteten Siebgewebes mit jeweils einer ebenen durchbrochenen Decklage abwechselt, oder

c) jeweils eine Lage eines gewellten oder gefalteten Bleches mit jeweils einer ebenen durchbrochenen Decklage abwechselt

und das Filter mit einem katalysefördernden Metalloxid unter Füllung der Querschnitte der gemäß a), b) und c) definierten Öffnungen beschichtet ist, wobei die Oxidschicht gasdurchlässig ausgebildet ist.

In der DE-C-750 701 ist zwar schon ein Spiralfilter beschrieben, bei welchem ein zylindrischer, gasdurchlässiger Wickelkörper an den gegenüberliegenden Stirnflächen so durch Abdeckmittel verschlossen ist, daß ein verschlossener Stirnflächenabschnitt einem offenen Stirnflächenabschnitt gegenüberliegt. Dieses Filter weist keine gewellten oder gefalteten Lagen oder eine Kombination einer solchen Lage mit einer ebenen Decklage auf, sondern erzwingt die Durchströmung der Filterflächen durch das Abgas dadurch, daß abstandserzeugende Profilschnüre zwischen Flachbahnen aus Papier oder ähnlichen nichtmetallischen Werkstoffen bündig mit den Seitenkanten der Bahnen eingelegt sind, und zwar abwechselnd Vollprofile und Profile mit Durchlaßöffnungen. Schon wegen der Materialwahl sind solche, für relativ kühle Gase gedachte Filter weder zur Reinigung heißer Dieselabgase durch Filtration noch zur Aufnahme hitzebeständiger Katalysatoren zur Schaffung eines katalytischen Filters geeignet.

Die DE-C-884 904 beschreibt ein ebenfalls nur für relativ kühle Gase geeignetes Filter, dessen Filtermaterial aus einer gegossenen Papiermasse besteht, wobei die Filterflächen nicht als Paket geschichtet oder spiralig aufgewickelt, sondern als konzentrische Zylinder ausgebildet sind, welche stirnseitig abwechselnd durch ringförmige Filterflächen miteinander verbunden sind.

Für das erfindungsgemäße katalytische Dieselfilter sind eine Reihe von Ausführungsvarianten günstig.

Die ebene Decklage kann ein glattes Blech oder ein metallisches Siebgewebe sein.

Über eine, oder bei gleicher geometrischer Form, über mehrere Siebgewebelagen kann stirnseitig eine ihrem jeweiligen Profil angepaßte U-förmige Einfassung geschoben sein, welche an ihr befestigt ist.

Zur Fixierung der Lagen des Filters hat es sich als günstig erwiesen, die Einfassungen mit den Lagen punktförmig oder flächig zu verschweißen oder zu verlöten. Eine aus abwechselnd mindestens einer Lage eines gewellten oder gefalteten Siebgewebes und mindestens einer ebenen, geschlossenen oder durchbrochenen Decklage hergestellte Packung oder Wicklung wird zweckmäßig zur weiteren mechanischen Verfestigung stirnseitig verschweißt oder verlötet.

Die so hergestellten Filterkörper können nach üblichen Verfahren, z. B. durch Elektroplattieren oder Imprägnieren mit Edelmetall und/oder Unedelmetall belegt werden. Sie werden gemäß Erfindung zu einem mit einem üblichen Trägermaterial für Katalysatoren überzogenen, mit Lösungen aktiver Katalysatormetalle imprägnierbaren Träger verarbeitet. Dabei wird die besonders intensive Filterwirkung dadurch ermöglicht, daß das Filter mit einem katalysefördernden Metalloxid unter Füllung der Querschnitte der im Anspruch gemäß a), b) und c) definierten Öffnungen in gasdurchlässigen Lagen beschichtet ist, wobei die Oxidschicht gasdurchlässig ausgebildet ist. Die Filterwirkung wird hier über die Porosität der Oxidschicht eingestellt.

Als katalysefördernde Zusätze können in dieses Metalloxid noch die Elemente Cer, Zirkon, Eisen, Nickel, Seltene Erden, oder eine Kombination aus diesen, eingebaut werden. Die Trägermaterialzwischenschicht wird dann nach gängigen Verfahren mit dem eigentlichen Katalysator versehen.

Das zum Abdecken der Stirnflächen verwendete Mittel besteht aus temperatur- oder korrosionsbeständigem Material. Das Abdeckmittel kann aus einer keramischen Masse, einem Schweiß- oder Lötauftrag oder aus einer anliegenden und/oder befestigten Schablone bestehen, die gegebenenfalls als eine einen Teil des Mantels des Pakets oder der Wicklung umgreifende Lochmaske ausgebildet ist.

Als Abdeckmittel für die Stirnflächenabschnitte eignen sich besonders Stopfen aus einer keramischen Masse, welche aus Talk und Wasserglas besteht. Mit dieser Masse werden an den beschriebenen Filterkörpern die einzelnen Kanäle so verstopft, daß abwechselnd ein verschlossenes Kanalende einem offenen Kanalende gegenüberliegt, d. h. daß bei einer spiraligen Anordnung der Lagen ein verschlossener Stirnflächenabschnitt zwei offenen Stirnflächenabschnitten benachbart ist und umgekehrt.

Die Abdeckung der Stirnflächenabschnitte kann auch derart erfolgen, daß eine an den Stirnflächen anliegende und/oder befestigte Schablone gegebenenfalls als eine einen Teil des Mantels des Pakets oder der Wicklung umgreifende Loch- oder Schlitzmaske ausgebildet ist, welche für die Schließung der entsprechenden Kanalenden sorgt.

Die Maske kann so gestaltet sein, daß sie bei einem spiralförmig aufgewickelten, ausschließlich aus Siebgewebe gefertigten Filter jeweils abwechselnd Abschnitte in der Breite der doppelten Amplitude der Wellung oder Faltung abdeckt und offenläßt, wobei sich an gegenüberliegenden Stirnseiten jeweils offene und geschlossene Abschnitte gegenüberstehen. Damit wird erreicht, daß in einem offenen Stirnflächenabschnitt eintretendes Abgas an der diesem Abschnitt gegenüberliegenden Stirnseite nicht austreten kann, sondern die gasdurchlässigen Zwischenwände des Filters passieren muß.

Die spiralförmigen Öffnungssegmente können bis knapp um den Umfang einer Wicklung oder eines Paketes herumführen, wobei gewährleistet sein muß, daß zur Verhinderung von Bypaßwirkung stets eine entsprechende Überlappung der verschlossenen Stirnflächenanteile gegeben ist. Eine Segmentteilung der spiralförmig geschlitzten Flächen durch ungerade Zahlen ist ebenfalls möglich.

Eine weitere Ausführungsform sieht vor, die Stirnflächen in der schon beschriebenen Art und Weise durch Schweiß- oder Lötauftrag zu verschließen.

Das verwendete Siebgewebe kann eine Bahn mit einer Maschenweite von 0,25 bis 0,025, vorzugsweise 0,1 bis 0,05 und mit einer Drahtstärke von 0,15 bis 0,025, vorzugsweise 0,1 bis 0,05, insbesondere 0,07 mm darstellen.

Als geschlossene Decklagen finden Metallbänder mit einer Wandstärke unterhalb 0,15 mm Verwendung.

Breite und Höhe der von den abwechselnd angeordneten glatten und gewellten bzw. gefalteten Lagen umschlossenen Zellen sollte nicht kleiner als 0,5 mm sein.

Die gewellte Lage kann verschieden geformt sein. Günstig ist, wenn sie Sinusform oder die Form einer Evolvente oder eine rechteckige oder quadratische Form aufweist.

Für die katalytischen Filter gemäß Erfindung eignen sich besonders Bleche und Siebgewebe, welche aus einer Legierung von Eisen, Chrom, Aluminium und gegebenenfalls Cer oder Yttrium und den üblichen Legierungsbegleitelementen bestehen, bzw. andere hitzefeste und zunderbeständige Materialien.

Die erfindungsgemäßen katalytischen Filter in Paket- oder Wicklungsform können zu ihrer mechanischen Stabilisierung in einem stirnseitig offenen Stahlmantel angeordnet und mit diesem durch Verlötung oder Verschweißung fest verbunden sein. Eine Wärmeisolierung des Stahlmantels mit Hochtemperaturisoliermaterial kann von Vorteil sein.

Muß das katalytische Filter, z. B. aus Platzgründen, an Stellen kälterer Abgastemperaturen installiert werden, oder soll bereits während der Kaltstartphase mit dem Abbau von Ruß und »particulates« begonnen werden, so kann von Vorteil sein, Stromzuführungen zu dauernder oder periodischer galvanischer Erhitzung der Lagen zu installieren.

Das erfindungsgemäße katalytische Filter ist für alle Abgasreinigungsanlagen, für Dieselbrennkraftmaschinen geeignet. Hierbei wird das Filter im Auspuffkrümmer direkt am Motorblock plaziert. Ein Abbau der oxidierbaren flüchtigen Bestandteile des Abgases kann durch Vorsehen einer dafür geeigneten katalytischen Beschichtung parallel zur Beseitigung der Schwebstoffe erfolgen. Dem Filter kann dafür aber auch ein gesonderter Katalysator nachgeschaltet werden.

Die Erfindung wird im folgenden anhand von verschiedenen wirkungsvollen Ausführungsformen, welche in der Zeichnung dargestellt sind, weiter erläutert. In der Zeichnung zeigt

Fig. 1 Grund- und Aufriß eines zylindrischen Wickelkörpers, bei dem ein mit Stopfen verschlossener Stirnflächenabschnitt einem offenen Stirnflächenabschnitt gegenüberliegt,

Fig. 2 zwei mögliche Formen von Abdeckmasken, wenn eine gewickelte Matrix außer der äußeren Umhüllung zur Gänze aus Siebgewebe besteht, sowie die Teilansicht eines Schnittes durch einen solchen Wickelzylinder,

Fig. 3 verschiedene Kombinationsmöglichkeiten von Siebgewebe bzw. Blech und

Fig. 4 eine schematische Darstellung einer erfindungsgemäßen Siebgewebeanordnung mit Stromzuführungen zur galvanischen Erhitzung der Lagen.

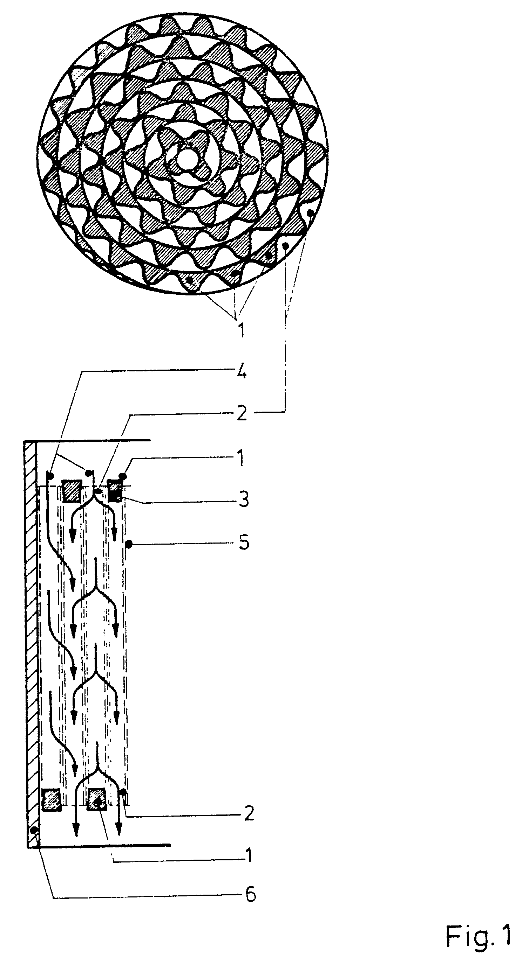

Wie aus Fig. 1 ersichtlich, besteht eine Ausführung der Erfindung aus spiralig aufgewikkelten Lagen aus glattem Siebgewebe, oder glatter Metallfolie und gewelltem Siebgewebe. Die dadurch gebildeten Kanäle sind an der einen Stirnseite bei 1 verschlossen und an der anderen Stirnseite bei 2 offen. Als Verschluß dient ein Stopfen 3 aus keramischer Masse, bestehend z. B. aus einer gehärteten Talk/Wasserglas-Masse. Das Abgas 4 tritt durch die Stirnseite an den offenen Kanälen des Filters ein, durchdringt die porösen Seitenwände 5 und tritt am anderen Ende an den offenen Seiten der Kanäle wieder aus. Zur Anwendung in Auspuffsystemen von Kraftfahrzeugen ist der Wickelkörper in einen Metallmantel 6 eingepaßt und damit fest verbunden.

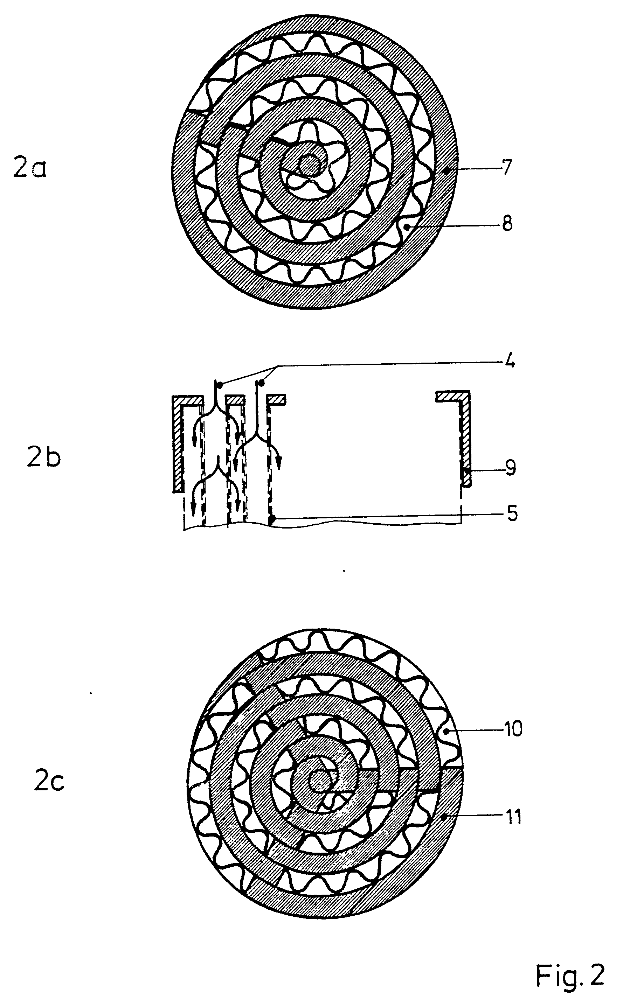

Als Abdeckmittel zum partiellen Verschließen von Stirnflächenabschnitten eignen sich aber auch Loch- oder Schlitzmasken wie in Fig. 2 gezeigt. Fig. 2a und 2c stellen alternative Formen einer Schlitzmaske dar. Mit ihnen werden Kreissegmente 7, 11 der Stirnflächen abgedeckt, während die nichtabgedeckten Segmente 8, 10 an der gegenüberliegenden Stirnfläche verschlossen sind. Fig. 2b zeigt einen Schnitt durch eine zylindrische Anordnung von Siebgeweben, worin schematisch der Verlauf der Abgasströmung 4 durch die Siebgewebelagen 5 dargestellt ist. Die zur Abdeckung verwendete Schlitzmaske kann als Kappe 9 ausgeführt und mit dem Wickelkörper durch Verschweißen oder Verlöten fest verbunden sein.

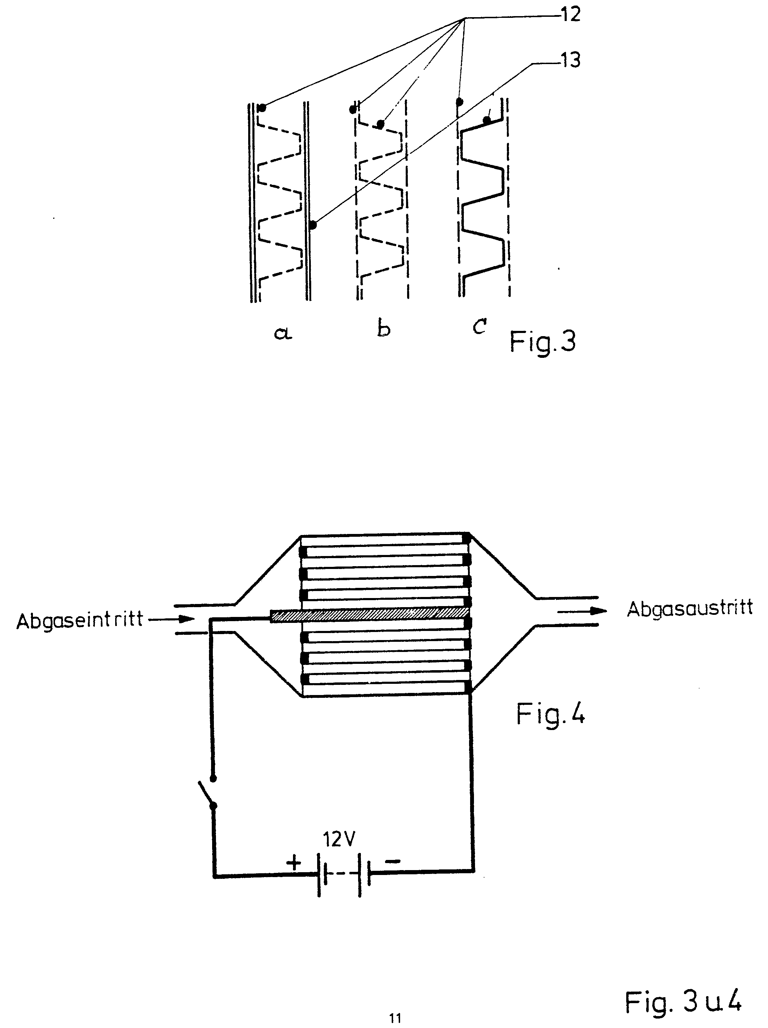

Wie Fig. 3 zeigt, gibt es verschiedene Kombinationsmöglichkeiten von Siebgewebe 12 und Bleche 13. So können die gewellten oder gefalteten Lagen aus Siebgewebe und die Decklagen aus glatter Metallfolie bestehen — Fall a), oder die gewellten oder gefalteten Decklagen aus Siebgewebe — Fall b). Es besteht aber auch die Möglichkeit, die gewellten oder gefalteten Lagen aus Blech herzustellen und als Decklage ein entsprechendes Siebgewebe zu verwenden — Fall c).

Wie erwähnt, kann es von Vorteil sein, das katalytische Filter vor Inbetriebnahme des Motors über Zündschloß und Zeitrelais vorzuheizen und dadurch die besonders in der Kaltstartphase eines Dieselmotors auftretenden Rußmengen und »particulates« abzubauen. Auch kann dies während normaler Betriebsphasen, z. B. bei zu niedriger Abgastemperatur oder zu starker Rußansammlung auf dem Filter und dadurch bewirktem erhöhten Druckverlust im Abgassystem erforderlich werden.

In Fig. 4 ist schematisch die Möglichkeit dargestellt, ein erfindungsgemäßes katalytisches Filter mit Hilfe einer normalen Autobatterie galvanisch aufzuheizen. So kann z. B. der Stromkreis während des Startvorganges automatisch für beispielsweise 30 Sekunden eingeschaltet werden. Anschließend übernimmt entweder ein Zeitrelais oder ein Differenzdruckschalter die Kontrollfunktion über den Stromfluß.

## Patentanspruch

Katalytisches Filter für die Dieselmotorabgasreinigung aus zu einem gasdurchlässigen Paket geschichteten oder zu einem gasdurchlässigen Körper spiralig aufgewickelten Lagen, wobei das Paket bzw. der Wickelkörper an den gegenüberliegenden Stirnflächen so durch Abdeckmittel verschlossen ist, daß ein verschlossener Stirnflächenabschnitt einem offenen Stirnflächenabschnitt gegenüberliegt, dadurch gekennzeichnet, daß die Lagen aus temperatur- und korrosionsbeständigem Metall bestehen, wobei entweder

a) jeweils eine Lage eines gewellten oder gefalteten Siebgewebes mit jeweils einer ebenen, geschlossenen Decklage abwechselt, oder
b) jeweils eine Lage eines gewellten oder gefalteten Siebgewebes mit jeweils einer ebenen durchbrochenen Decklage abwechselt, oder
c) jeweils eine Lage eines gewellten oder gefalteten Bleches mit jeweils einer ebenen durchbrochenen Decklage abwechselt

und das Filter mit einem katalysefördernden Metalloxid unter Füllung der Querschnitte der gemäß a), b) und c) definierten Öffnungen beschichtet ist, wobei die Oxidschicht gasdurchlässig ausgebildet ist.

## Claim

A catalytic filter for the purification of diesel engine exhaust gas, consisting of layers which are arranged in a pile to produce a gas-permeable package, or are wound up spirally to produce a gas-permeable body, the package or the wound body being sealed at the opposite front faces by cover means so that a sealed front face section is opposite an open front face section, characterised in that the layers consist of temperature- and corrosionresistant metal, and either

a) in each case one layer of a wavy or folded screen cloth alternates with in each case one flat, closed cover layer, or
b) in each case one layer of a wavy or folded screen cloth alternates with in each case one flat perforated cover layer, or
c) in each case one layer of a wavy or folded sheet alternates with in each case one flat perforated cover layer

and the filter is coated with a catalysis-promoting metal oxide, with filling of the cross sections of the openings defined according to a), b) and c), and the oxide layer is designed to be permeable to gas.

## Revendication

Filtre à catalyse pour l'epuration des gaz d'échappement de moteur Diesel consistant en couches empilées en un paquet perméable aux gaz ou enroulées en spirale en un corps perméable aux gaz, le paquet ainsi que le corps enrculé étant fermés sur leurs faces frontales opposées par un organe de recouvrement de telle sorte que, en face d'une portion de surface frontale obturée, se trouve une portion de surface frontale ouverte-, filtre caractérisé en ce que les couches sont constituées en métal résistant à la température et à la corrosion auquel cas:

a) ou bien un tissu filtrant ondulé ou plissé alterne chaque fois avec une couche de recouvrement plane, fermée,
b) ou bien une couche de tissu filtrant ondulé ou plissé est remplacé chaque fois par une couche de revêtement plane perforée,
c) une couche de tôle ondulée ou plissée est remplacée par une couche de recouvrement plane perforée, et le filtre est chargé avec un oxyde métallique favorisant la catalyse en remplissant les sections transversales des overtures définies conformément à a), b) et c), cette couche d'oxyde étant perméable aux gaz.

Fig. 1

2a

2b

2c

Fig. 2

Fig.3

Abgaseintritt

Abgasaustritt

Fig.4

12V

Fig. 3 u 4